# EUROPÄISCHE PATENTSCHRIFT

(11) **EP 1 662 180 B1**
(45) Veröffentlichungstag und Bekanntmachung des Hinweises auf die Patenterteilung: **02.04.2008**
(21) Anmeldenummer: 05024643.8
(22) Anmeldetag: 11.11.2005
(51) Int. Cl.: F16H 57/12, F16H 3/093

(54) **Einrichtung zur Reduzierung der Axialbewegung der Hauptwellenräder bei einem Getriebe mit zumindest zwei Vorgelegewellen**
Device to reduce the axial movement of the gear wheels of the main shaft in a transmission with at least two countershafts
Dispositif pour réduire la mouvement axiale des roues dentées de l'arbre principal d'une boîte de vitesses avec au moins deux arbres de renvoi

(30) Priorität: 26.11.2004 DE 102004057126
(43) Veröffentlichungstag der Anmeldung: 31.05.2006
(73) Patentinhaber: ZF FRIEDRICHSHAFEN AG, 88038 Friedrichshafen (DE)
(72) Erfinder: Renner, Stefan, 78351 Bodman-Ludwigshafen (DE)

(56) Entgegenhaltungen:
- EP-A- 0 572 126
- DE-A1- 3 708 100
- DE-A1- 3 736 597

## Beschreibung

Die vorliegende Erfindung betrifft eine Einrichtung zur Reduzierung der Axialbewegung der Hauptwellenräder bei einem Getriebe mit zumindest zwei Vorgelegewellen, gemäß dem Oberbegriff des Patentanspruchs 1, und wie sie aus der DE 10059377 A bekannt ist.

Nach dem Stand der Technik werden bei Getrieben mit zumindest zwei Vorlegewellen die als Hauptwellenräder dienenden Losräder radial in den beiden Verzahnungen der Vorlegewellen geführt. In axialer Richtung sind die Hauptwellenräder durch Anlaufscheiben auf der Hauptwelle geführt, wobei eine Anlaufscheibe des Losrades zwischen zwei auf der Hauptwelle angeordneten Anlaufscheiben angeordnet ist. Hierbei entsteht der Nachteil, dass durch Fertigungstoleranzen und die zur Ölschmierung erforderliche Spalte relativ große Spiele entstehen, so dass, wenn die Massen der Losräder auf Grund von Taumelbewegungen der Hauptwelle oder Drehschwingungen angeregt werden, ein unangenehmes Rasselgeräusch entsteht.

Im Rahmen der EP 0 361 686 A1 wird für ein Getriebe mit einer Vorgelegewelle vorgeschlagen, das auf der Vorgelegewelle' angeordnete Zahnrad der Antriebskonstante derart auf der Vorgelegewelle anzuordnen, dass durch ein dadurch entstehendes kleines Spiel sowie durch ein mit dem Zahnrad verbundenes parallel zur Vorgelegewelle angeordnetes Dämpfungselement, welches einen Teil der Vorgelegewelle umhüllt, die Schwingungen des Zahnrades nicht auf die Vorgelegewelle übertragen werden, um auf diese Weise das Rasselgeräusch möglichst zu unterdrücken. Diese Konstruktion erweist sich als aufwändig; zudem können die Rasselgeräusche nicht vollständig unterdrückt werden, da die weiteren auf der Vorgelegewelle angeordneten angeordneten Räder mit den entsprechenden Losrädern der Abtriebswelle ohne weitere konstruktive Maßnahmen in Eingriff stehen.

Des weiteren ist bekannt, bei der axialen Führung der Hauptwellenräder neben der zwischen zwei auf der Hauptwelle angeordneten Anlaufscheiben anordbaren Anlaufscheibe des Hauptwellenrades eine weitere Scheibe vorzusehen, welche fest mit dem Hauptwellenrad verbunden ist und sich an der Stirnseite der Verzahnung der Vorgelegewellen oder der Zwischenwelle für den Rückwärtsgang abstützt. Hierbei ist vorgesehen, dass das Hauptwellenrad mittels Federwirkung gegen die Scheibe gedrückt bzw. geschoben wird. Bei dieser Konstruktion kann sich der Montageaufwand als nachteilig erweisen.

Schließlich ist aus der EP 0 572 126 A eine Einrichtung zur Reduzierung der Axialbewegung der Hauptwellenräder bei einem Getriebe mit zumindest zwei Vorgelegewellen bekannt, wobei die Hauptwellenräder, axial betrachtet, durch zwei Anlaufscheiben gehalten werden. Durch diese Anordnung kann eine Vermeidung von Geräuschen nicht erzielt werden.

Der vorliegenden Anmeldung liegt die Aufgabe zugrunde, eine Einrichtung zur Reduzierung der Axialbewegungen der Hauptwellenräder in einem Getriebe mit zumindest zwei Vorgelegewellen anzugeben, die eine sichere axiale Halterung für die radial bewegbaren Komponenten gewährleistet, ohne zusätzlichen axialen Bauraum zu benötigen.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, die axiale Bewegung der Hauptwellenräder durch Anfedern der Räder zu reduzieren. Hierbei soll das Spiel zwischen den Hauptwellenrädern und den die Räder axial haltenden Anlaufscheiben minimiert werden, so dass sich die Räder axial nicht mehr bewegen können.

Erfindungsgemäß wird eine Einrichtung zur Reduzierung der axialen Bewegung der Hauptwellenräder vorgeschlagen, wobei die Hauptwellenräder axial betrachtet durch zwei Anlaufscheiben gehalten werden, welche als eine auf der Hauptwelle angeordnete Anpresseinrichtung für zumindest eines der Hauptwellenräder gegen eine das Hauptwellenrad axial haltende Anlaufscheibe ausgebildet ist.

Insbesondere wird eine Einrichtung zur Reduzierung der axialen Bewegung der Hauptwellenräder vorgeschlagen, welche für zumindest ein Hauptwellenrad ein Federelement und eine Ringscheibe umfasst, die derart angeordnet sind, dass das Federelement die Ringscheibe gegen das Hauptwellenrad drückt, so dass eine axiale Bewegung des Hauptwellenrades verhindert wird.

Dabei ist vorgesehen, die Ringscheibe auf eine das Hauptwellenrad auf der Hauptwelle axial haltende Anlaufscheibe konzentrisch anzuordnen, wobei die Anlaufscheibe radial betrachtet an ihrer der Ringscheibe zugewandten Seite und axial betrachtet in Richtung auf das Hauptwellenrad eine Ausnehmung bzw. Aufnahme zur Aufnahme der Ringscheibe und des Federelementes aufweist, derart, dass das Federelement axial betrachtet zwischen dem oberen Teil der Anlaufscheibe und der Ringscheibe angeordnet ist und diese gegen das Hauptwellenrad drückt.

Die Ringscheibe ist erfindungsgemäß derart ausgeführt, dass die Axialkraft aus der Schrägverzahnung des Hauptwellenrades z.B. an ihrem Innendurchmesser auf die Hauptwelle übertragen wird. Des weiteren ist das bevorzugterweise als Tellerfeder ausgebildete Federelement um den Betrag des Spiels zwischen den Anlaufscheiben vorgespannt, so dass das Federelement klein dimensioniert werden kann. Gemäß der Erfindung weist die Ringscheibe in ihrer dem Hauptwellenrad zugewandten Seite gute Gleiteigenschaften auf.

Im Rahmen einer besonders vorteilhaften Weiterbildung der Erfindung wird zudem vorgeschlagen, die Anlaufscheibe, auf der die Ringscheibe angeordnet ist, zumindest in radialer Richtung derart zu dimensionieren, dass die Hebelwirkung der Anpressung der Ringscheibe gegen das Hauptwellenrad vergrößert wird.

Durch die erfindungsgemäße Konzeption wird eine kostengünstige und leicht realisierbare Lösung angeboten, durch die die Axialbewegung der Hauptwellenräder weitgehend reduziert wird.

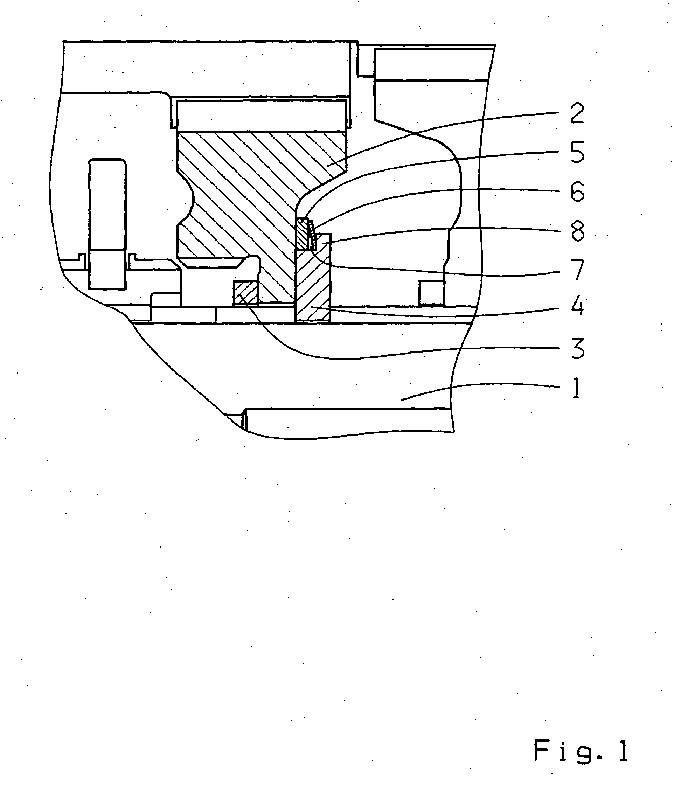

Die Erfindung wird im Folgenden anhand der beigefügten Figur, welche eine schematische Schnittansicht eines für die Erfindung relevanten Bereiches der Hauptwelle eines Getriebes mit zwei Vorgelegewellen darstellt, umfassend eine besonders vorteilhafte Ausführungsform der erfindungsgemäßen Einrichtung, beispielhaft näher erläutert.

In der Figur wird eine Hauptwelle 1 gezeigt, auf der ein Hauptwellenrad 2 zwischen zwei Anlaufscheiben 3, 4 angeordnet ist, welche das Hauptwellenrad 2 axial halten. Die Anlaufscheiben 3, 4 sind vorzugsweise drehfest in entsprechenden Nuten in der Hauptwelle 1 gelagert.

Zur Minimierung des Spiels des Hauptwellenrades 2 zwischen den Anlaufscheiben 3, 4 ist eine Einrichtung, umfassend eine Ringscheibe 5 und ein vorzugsweise als Tellerfeder 6 ausgebildetes Federelement vorgesehen, welche das Hauptwellenrad 2 gegen die Anlaufscheibe 3 drückt.

Hierbei ist die Ringscheibe 5 auf der das Hauptwellenrad 2 auf der Hauptwelle 1 axial haltenden Anlaufscheibe 4 konzentrisch angeordnet, wobei die Anlaufscheibe 4 radial betrachtet an ihrer der Ringscheibe 5 zugewandten Seite und axial betrachtet in Richtung auf das Hauptwellenrad 2 eine Ausnehmung 7 bzw. Aufnahme zur Aufnahme der Ringscheibe 5 und des Federelementes 6 aufweist. Auf diese Weise ist das Federelement 6 axial betrachtet zwischen dem oberen Teil 8 der Anlaufscheibe 4 und der Ringscheibe 5 angeordnet und drückt die Ringscheibe 5 gegen das Hauptwellenrad 2, wodurch das Hauptwellenrad 2 gegen die Anlaufscheibe 3 gedrückt wird. Die Axialkräfte werden über die Ringscheibe 5 und die Anlaufscheibe 4 auf die Hauptwelle 1 übertragen. Wie bereits erläutert, ist das Federelement 6 um den Betrag des Spiels zwischen den Anlaufscheiben 3, 4 vorgespannt. Ferner weist die Ringscheibe 5 und die Anlaufscheibe 3 in ihrer dem Hauptwellenrad 2 zugewandten Seite gute Gleiteigenschaften auf.

Wie zudem aus der Figur ersichtlich, ist die.Anlaufscheibe 4, auf der die Ringscheibe 5 angeordnet ist, radial betrachtet größer dimensioniert, als die andere Anlaufscheibe 3, so dass die Hebelwirkung der Anpressung des Hauptwellenrades 2 erhöht wird.

Selbstverständlich fällt auch jede konstruktive Ausbildung, insbesondere jede räumliche Anordnung der Bauteile der erfindungsgemäßen Einrichtung, insbesondere der Ringscheibe und des Federelementes an sich sowie zueinander und soweit technisch sinnvoll, unter den Schutzumfang der vorliegenden Ansprüche, ohne die Funktion der Einrichtung, wie sie in den Ansprüchen angegeben ist, zu beeinflussen, auch wenn diese Ausbildungen nicht explizit in der Figur oder in der Beschreibung dargestellt sind.

### Bezugszeichen

- 1: Hauptwelle
- 2: Hauptwellenrad
- 3: Anlaufscheibe
- 4: Anlaufscheibe
- 5: Ringscheibe
- 6: Federelement, Tellerfeder
- 7: Ausnehmung
- 8: oberer Teil der Anlaufscheibe 4

## Patentansprüche

1. Einrichtung zur Reduzierung der Axialbewegung der Hauplwellenräder (2) bei einem Getriebe mit zumindest zwei Vorgelegewellen, wobei die Hauptwellenräder (2), axial betrachtet, durch zwei Anlaufscheiben (3, 4) gehalten werden, **dadurch gekennzeichnet, dass** sie als eine auf der Hauptwelle (1) angeordnete Anpresseinrichtung (5, 6) für zumindest eines der Hauptwellenräder (2) gegen eine das Hauptwellenrad (2) axial haltende Anlaufscheibe (3) ausgebildet ist und für zumindest ein Hauptwellenrad (2) ein Federelement (6) und eine Ringscheibe (5) umfasst, die derart angeordnet sind, dass das Federelement (6) die Ringscheibe (5) gegen das Hauptwellenrad (2) drückt, so dass eine axiale Bewegung des Hauptwellenrades (2) verhindert wird, wobei die Ringscheibe (5) auf einer das Hauptwellenrad (2) auf der Hauptwelle (1) axial haltenden Anlaufscheibe (4) konzentrisch angeordnet ist und wobei die Anlaufscheibe (4) radial betrachtet an ihrer der Ringscheibe (5) zugewandten Seite und axial betrachtet in Richtung auf das Hauptwellenrad (2) eine Ausnehmung bzw. Aufnahme (7) zur Aufnahme der Ringscheibe (5) und des Federelementes (6) aufweist, derart, dass das Federelement (6) axial betrachtet zwischen dem oberen Teil (8) der Anlaufscheibe (4) und der Ringscheibe (5) angeordnet ist und die Ringscheibe (5) gegen das Hauptwellenrad (2) drückt, wodurch das Hauptwellenrad (2) gegen die weitere Anlaufscheibe (3) gedrückt wird.

2. Einrichtung zur Reduzierung der Axialbewegung der Hauptwellenräder (2) bei einem Getriebe mit zumindest zwei Vorgelegewellen nach Anspruch 1, **dadurch gekennzeichnet, dass** das Federelement (6) als Tellerfeder ausgebildet ist.

3. Einrichtung zur Reduzierung der Axialbewegung der Hauptwellenräder (2) bei einem Getriebe mit zumindest zwei Vorgelegewellen nach Anspruch 1 oder 2, **dadurch gekennzeichnet, dass** das Federelement (6) um den Betrag des Spiels zwischen den Anlaufscheiben (3, 4) vorgespannt ist.

4. Einrichtung zur Reduzierung der Axialbewegung der Hauptwellenräder (2) bei einem Getriebe mit zumindest zwei Vorgelegewellen nach Anspruch 1, 2 oder 3, **dadurch gekennzeichnet, dass** die Anlaufscheibe (4), auf der die Ringscheibe (5) angeordnet ist, radial betrachtet größer dimensioniert ist, als die weitere Anlaufscheibe (3), so dass die Hebelwirkung der Anpressung des Hauptwellenrades (2) erhöht wird.

## Claims

1. The invention relates to a device for reduction of the axial motion of the main-shaft gears (2) in a transmission with at least two countershafts, with an axial view showing that the main-shaft gears (2) are held by two stop disks (3, 4), **characterized in that** it is arranged on the main shaft (1) as a pressure device (5, 6) for at least one of the main-shaft gears (2) and acts against a stop disk, which axially holds the main-shaft gear (2), and that for at least one main-shaft gear (2) it comprises a spring element (6) and a ring disk (5), which are arranged in such a way that the spring element (6) presses the ring disk (5) against the main-shaft gear (2), so that axial motion of the main-shaft gear (2) is prevented, with the ring disk (5) being coaxially arranged on a stop disk (4), which axially holds the main-shaft gear (2) on the main shaft (1), and with the stop disk (4) featuring a recess or seat (7) on the side facing the ring disk (5), radially seen, or facing the main-shaft gear, axially seen, for accommodation of the ring disk (5) and the spring element (6) in such a manner that, axially seen, the spring element (6) is arranged between the upper part (8) of the stop disk (4) and the ring disk (5) and the ring disk (5) presses against the main-shaft gear (2), as a result of which the main-shaft gear (2) is pressed against a further stop disk (3).

2. A device for reduction of the axial motion of the main-shaft gears (2) in a transmission with at least two countershafts according to claim 1, **characterized in that** the spring element (6) is designed as a disk spring.

3. A device for reduction of the axial motion of the main-shaft gears (2) in a transmission with at least two countershafts according to claim 1 or 2, **characterized in that** the spring element (6) is subjected to a preload which is equivalent to the clearance between the stop disks (3, 4).

4. A device for reduction of the axial motion of the main-shaft gears (2) in a transmission with at least two countershafts according to claim 1, 2 or 3, **characterized in that**, radially seen, the stop disk (4), on which the ring disk (5) is arranged, is of greater dimensions compared to the further stop disk (3), so that the leverage of the pressure of the main-shaft gear (2) is increased.

## Revendications

1. Dispositif de réduction du mouvement axial des pignons de l'arbre principal (2) d'une boîte de vitesses dotée d'au moins deux arbres intermédiaires, sachant que les pignons de l'arbre principal (2) sont maintenus dans le sens axial par deux cales (3, 4), **caractérisé en ce qu'**il est réalisé comme un dispositif de serrage (5, 6) disposé sur l'arbre principal (1) d'au moins un des pignons de l'arbre principal (2) contre une cale (3) maintenant le pignon de l'arbre principal (2) dans le sens axial et comprenant pour au moins un pignon de l'arbre principal (2) un élément élastique (6) et une bague annulaire (5), disposées de manière à ce que l'élément éleastique (6) presse la bague annulaire (5) contre le pignon de l'arbre principal (2), inhibant ainsi tout mouvement axial du pignon de l'arbre principal (2), sachant que la bague annulaire (5) est disposée concentriquement sur une cale (4) maintenant le pignon de l'arbre principal (2) axialement sur l'arbre principal (1) et sachant que la cale (4) comporte dans le sens radial du côté orienté vers la bague annulaire (5) et dans le sens axial en sens du pignon de l'arbre principal (2) un évidement ou un logement (7) pour le logement de la bague annulaire (5) et de l'élément élastique (6), de façon à ce que l'élément élastique (6) est disposé dans le sens axial entre la partie supérieure (8) de la cale (4) et de la bague annulaire (5) et la bague annulaire (5) presse contre le pignon de l'arbre principal (2), de façon à presser le pignon de l'arbre principal (2) contre l'autre cale (3).

2. Dispositif de réduction du mouvement axial des pignons de l'arbre principal (2) d'une boîte de vitesses dotée d'au moins deux arbres intermédiaires selon la revendication 1, **caractérisé en ce que** l'élément élastique (6) est réalisé comme un ressort Belleville.

3. Dispositif de réduction du mouvement axial des pignons de l'arbre principal (2) d'une boîte de vitesses dotée d'au moins deux arbres intermédiaires selon la revendication 1 ou 2, **caractérisé en ce que** l'élément élastique (6) est préchargé de la valeur du jeu entre les cales (3, 4).

4. Dispositif de réduction du mouvement axial des pignons de l'arbre principal (2) d'une boîte de vitesses dotée d'au moins deux arbres intermédiaires selon la revendication 1, 2 ou 3, **caractérisé en ce que** la cale (4) est disposée sur la bague annulaire (5) et **en ce que** dans le sens radial elle est dimensionnée plus grande que l'autre cale (3), de façon à augmenter l'effet de levier par la pression du pignon de l'arbre principal (2).
